# EUROPÄISCHE PATENTANMELDUNG

(11) **EP 3 616 980 A1**
(43) Veröffentlichungstag der Anmeldung: **04.03.2020**
(21) Anmeldenummer: 19178028.7
(22) Anmeldetag: 04.06.2019
(51) Int. Cl.: B60N 2/28, B60N 2/60

(54) **SCHONBEZUG FÜR DIE RÜCKSITZBANK EINES KRAFTFAHRZEUGS**

(30) Priorität: 31.08.2018 AT 2672018
(71) Anmelder: Walser GmbH, 6845 Hohenems (AT)
(72) Erfinder: Walser, Hans-Karl, 6845 Hohenems (AT)
(74) Vertreter: Hofmann, Ralf U.

(57) **Zusammenfassung**

Ein Schonbezug für die Rücksitzbank (1) eines Kraftfahrzeugs umfasst einen Sitzflächenabschnitt (8, 9) zum Überdecken der Sitzfläche (3), welcher einen Hauptabschnitt (8) zum Überdecken eines an den vorderen Rand der Sitzfläche anschließenden Hauptteils der Sitzfläche und einen an den Hauptabschnitt anschließenden Streifenabschnitt (9) zum Überdecken eines an den hinteren Rand der Sitzfläche anschließenden Randbereichs der Sitzfläche aufweist. Die in Richtung der Tiefe der Rücksitzbank gemessene Breite (b) des Streifenabschnitts beträgt weniger als ein Viertel der in Richtung der Tiefe der Rücksitzbank gemessenen gesamten Ausdehnung (a) des Sitzflächenabschnitts. Zwischen dem Hauptabschnitt des Sitzflächenabschnitts und dem Streifenabschnitt des Sitzflächenabschnitts ist mindestens eine Öffnung (19) ausgebildet, wobei zumindest im Bereich der Öffnung eine Überlappung (x) des Streifenabschnitts mit dem Hauptabschnitt vorliegt und im Bereich der Öffnung zumindest ein Verschlusselement (22) zum Verbinden des Streifenabschnitts mit dem Hauptabschnitt vorgesehen ist.

## Beschreibung

Die Erfindung bezieht sich auf einen Schonbezug für die Rücksitzbank eines Kraftfahrzeugs, umfassend einen Sitzflächenabschnitt zum Überdecken der Sitzfläche und einen an einen vorderen Rand und an seitliche Ränder des Sitzflächenabschnitts anschließenden Randabschnitt zur Anlage an der vorderen Schmalseite und an den seitlichen Schmalseiten der Rücksitzbank.

Schonbezüge für Autositze dienen zur Schonung des darunterliegenden Bezugsstoffes. Bei Schonbezügen für Rücksitzbänke sind einteilige Ausbildungen bekannt, welche sowohl die Rückenlehne als auch die Sitzfläche überdecken, als auch Ausbildungen, die nur die Sitzfläche überdecken, wobei für die Rückenlehne ein eigenes Bezugsteil vorgesehen werden kann.

Bei Schonbezügen für Rücksitzbänke ist es auch bekannt, Öffnungen vorzusehen, um durch diese hindurch einen Durchtritt von Gurtschlössern von Sicherheitsgurten zu ermöglichen.

Wenn Rücksitzbänke zusätzlich weitere Funktionselemente aufweisen, insbesondere Halterungsteile für Kindersitze, so werden häufig anstelle von Schonbezügen Sitzauflagen eingesetzt, die an der jeweiligen Kopfstütze der Rücksitzbank eingehängt werden und einen Rückenlehnenteil sowie einen Sitzflächenteil aufweisen, die nur in einem mittleren Verbindungsabschnitt miteinander verbunden sind. An diesen mittleren Verbindungsabschnitt schließen beidseitig Schlitze zwischen dem Rückenlehnenteil und dem Sitzflächenteil an, durch die hindurch Kindersitzhalterungsteile zugänglich sind. Solche Sitzauflagen haben aber den Nachteil, dass sie den darunterliegenden Bezugsstoff der Rücksitzbank nur unvollständig schützen, beispielsweise gegenüber einem Austritt von Flüssigkeiten. Auch ergibt sich eine uneinheitliche Optik der Rücksitzbank.

Aufgabe der Erfindung ist es einen vorteilhaften Schonbezug der eingangs genannten Art bereitzustellen, der Möglichkeiten zum Durchtritt von bzw. zum Zugang zu Funktionselementen, insbesondere Kindersitz-Halterungsteilen schafft. Erfindungsgemäß gelingt dies durch einen Schonbezug mit den Merkmalen des Anspruchs 1.

Beim Schonbezug gemäß der Erfindung weist der Sitzflächenabschnitt des Schonbezugs einen Hauptabschnitt zum Überdecken eines an den vorderen Rand der Sitzfläche anschließenden Hauptteils der Sitzfläche und einen an den Hauptabschnitt anschließenden Streifenabschnitt zum Überdecken eines an den hinteren Rand der Sitzfläche anschließenden Randbereichs der Sitzfläche auf, wobei die in Richtung der Tiefe des Sitzes gemessene Breite des Streifenabschnitts weniger als ein Viertel der in Richtung der Tiefe des Sitzes gemessenen gesamten Ausdehnung des Sitzflächenabschnitts beträgt. Zwischen dem Hauptabschnitt und dem Streifenabschnitt ist mindestens eine Öffnung ausgebildet, wobei zumindest im Bereich der Öffnung eine Überlappung des Streifenabschnitts und des Hauptabschnitts vorliegt. Hierbei überdeckt der Streifenabschnitt den Hauptabschnitt im Bereich dieser Überlappung. Im Bereich der Öffnung ist zumindest ein Verschlusselement, insbesondere ein Klettverschluss, zum Verbinden des Streifenabschnitts mit dem Hauptabschnitt vorgesehen.

Durch die erfindungsgemäße Ausbildung wird zumindest ein Zugang zu einem Funktionselement, insbesondere eines Kindersitz-Halterungsteils ausgebildet. Wenn dieser Zugang nicht benötigt wird, so fällt dieser durch die erfindungsgemäße Ausbildung nicht störend auf. Auch bei der Benutzung dieses Zugangs ist eine ansprechende Optik gewährleistet. Insbesondere werden symmetrisch zur Mitte der Rücksitzbank durch erste und zweite Öffnungen ein erster und ein zweiter Zugang zu Funktionselementen ausgebildet.

Der Streifenabschnitt erstreckt sich vorteilhafterweise über die gesamte, rechtwinklig zur Richtung der Tiefe des Sitzes gemessene Ausdehnung des Sitzflächenabschnitts.

Es wird damit eine einfache Ausbildung und ansprechende Optik erreicht.

In einer vorteilhaften Ausführungsform der Erfindung weist der Hauptabschnitt mindestens einen, in einem vom seitlichen Rand des Sitzflächenabschnitts abgelegenen Bereich angeordneten, in Richtung der Tiefe der Rücksitzbank verlaufenden Reißverschluss auf, der sich über zumindest einen Teil der in Richtung der Tiefe des Sitzes gemessenen Ausdehnung des Hauptabschnitts erstreckt und vorzugsweise bis zum Streifenabschnitt verläuft. Durch ein - teilweises - Öffnen dieses Reißverschlusses kann eine Durchtrittsöffnung für ein weiteres Funktionselement, insbesondere für ein Gurtschloss eines Sicherheitsgurts ausgebildet werden. Damit eine solche Öffnung mit einer gewünschten Länge an einer beliebigen Stelle des Reißverschlusses ausgebildet werden kann, weist der Reißverschluss vorteilhafterweise erste und zweite Schieber auf.

Weitere Vorteile und Einzelheiten der Erfindung werden im Folgenden anhand der beiliegenden Zeichnung erläutert. In dieser zeigen:
- Fig. 1: eine Schrägsicht eines Rücksitzes eines Kraftfahrzeuges mit einem an der Rücksitzbank angelegten Schonbezug gemäß der Erfindung;
- Fig. 2: einen schematischen Querschnitt durch den Rücksitz;
- Fig. 3: eine Schrägsicht eines Abschnitts nur der Rücksitzbank mit angelegtem Schonbezug, mehr von der Seite;
- Fig. 4: eine Schrägsicht des Schonbezugs, in der Form dargestellt, die er im an die Rücksitzbank angelegten Zustand annimmt;
- Fig. 5: eine Draufsicht auf einen Teil des Schonbezugs;
- Fig. 6: eine Draufsicht analog Fig. 5, der Streifenabschnitt im Bereich einer Öffnung aber teilweise umgeschlagen;
- Fig. 7 und 8: Darstellungen analog Fig. 5 und 6 auf die Rückseite des Schonbezugs (im angelegten Zustand des Schonbezuges der Rücksitzbank zugewandt).

Ein Ausführungsbeispiel ist in den Fig. dargestellt, teilweise vereinfacht und schematisiert. Der Rücksitz weist eine Rücksitzbank 1 auf, an die ein erfindungsgemäßer Schonbezug angelegt ist. Der Rücksitz weist außerdem eine Rückenlehne 2 auf. An diese kann ein anderer Schonbezug angelegt sein, der aber im Folgenden nicht weiter beschrieben wird.

Der Schonbezug weist einen Sitzflächenabschnitt auf, der zum Überdecken der Sitzfläche 3 der Rücksitzbank 1 dient, sowie einen Randabschnitt 6. Der Randabschnitt 6 dient zur Anlage an der vorderen Schmalseite 4 sowie an den beiden seitlichen Schmalseiten 5 der Rücksitzbank. Der Randabschnitt 6 schließt somit an den vorderen Rand 10 des Sitzflächenabschnitts und an die seitlichen Ränder 11 des Sitzflächenabschnitts an. Der vordere Rand 10 des Sitzflächenabschnitts liegt im Bereich des vorderen Randes der Sitzfläche 3 der Rücksitzbank 1 und die seitlichen Ränder 11 des Sitzflächenabschnitts liegen in Bereichen der seitlichen Ränder der Sitzfläche 3 der Rücksitzbank 1.

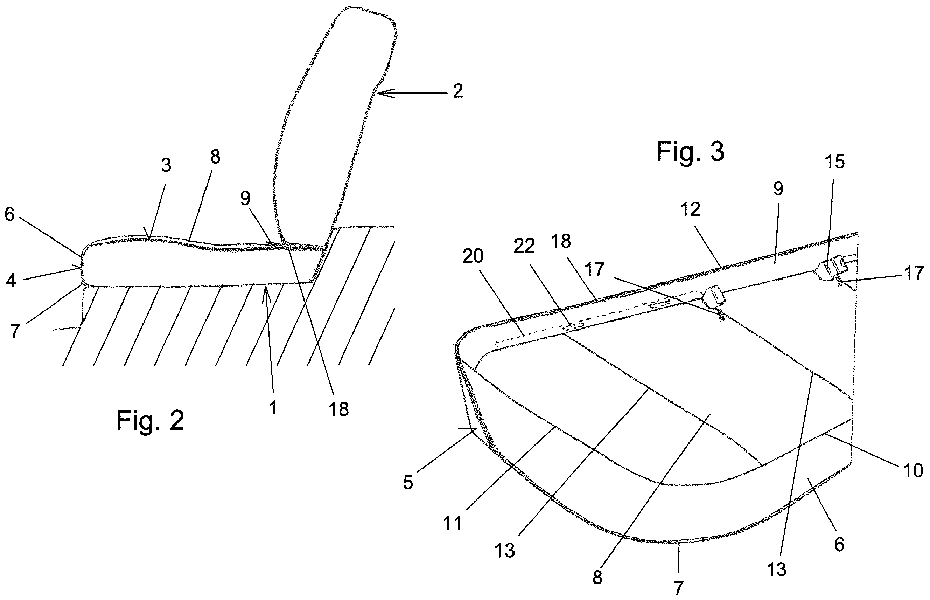

Um den Schonbezug an der Rücksitzbank zu halten, ist am unteren Ende des Randabschnitts 6 ein Gummizug 7 vorgesehen. Dieser liegt im an der Rücksitzbank 1 angelegten Zustand des Schonbezuges günstigerweise schon etwas im Bereich der Unterseite der Rücksitzbank, soweit diese zugänglich ist, vgl. Fig. 2.

Der Randabschnitt 6 ist im gezeigten Ausführungsbeispiel einteilig ausgebildet. Er könnte auch mehrere zusammengenähte Abschnitte aufweisen, beispielsweise einen Abschnitt für die vordere Schmalseite 4 und je einen Abschnitt für die seitlichen Schmalseiten 5.

Der die Sitzfläche 3 überdeckende Sitzflächenabschnitt umfasst einen Hauptabschnitt 8 sowie einen Streifenabschnitt 9. Der Hauptabschnitt 8 überdeckt im an die Rücksitzbank angelegten Zustand des Schonbezuges einen an den vorderen Rand der Sitzfläche anschließenden Hauptteil der Sitzfläche, vorzugsweise mehr als zwei Drittel der Sitzfläche, besonders bevorzugt mehr als 80% der Sitzfläche.

Der Hauptabschnitt 8 erstreckt sich bis zu den beiden seitlichen Rändern der Sitzfläche 3. Der vordere Rand 10 des Sitzflächenabschnitts wird somit insgesamt vom Hauptabschnitt 8 des Sitzflächenabschnitts gebildet.

Der Streifenabschnitt 9 überdeckt im an die Rücksitzbank 1 angelegten Zustand des Schonbezuges einen an den hinteren Rand der Sitzfläche 3 anschließenden Randbereich der Sitzfläche. Die in Richtung der Tiefe der Rücksitzbank, also parallel zur Fahrtrichtung, gemessene Breite b des Streifenabschnitts 9 beträgt weniger als ein Viertel der in der gleichen Richtung gemessenen gesamten Ausdehnung d des Sitzflächenabschnitts (welcher den Hauptabschnitt 8 und den Streifenabschnitt 9 umfasst).

Der Streifenabschnitt 9 erstreckt sich bis zu den beiden seitlichen Rändern der Sitzfläche 3, d. h. der Streifenabschnitt 9 erstreckt sich über die gesamte rechtwinklig zur Tiefe der Rücksitzbank 1 gemessene Ausdehnung des Sitzflächenabschnitts. Der hintere Rand 12 des Sitzflächenabschnitts wird somit insgesamt vom Streifenabschnitt 9 gebildet.

Der Streifenabschnitt 9 kann wie dargestellt durchgehend aus dem gleichen Material ohne Verbindungsnähte, also materialeinstückig ausgebildet sein.

Der Hauptabschnitt 8 besteht dagegen bevorzugt aus mehreren miteinander verbundenen Teilabschnitten 8a-8e. Im Ausführungsbeispiel sind die Teilabschnitte 8a-8e teilweise durch Nähte 13, teilweise durch Reißverschlüsse 14 miteinander verbunden, wie dies bevorzugt ist.

Speziell ist im Ausführungsbeispiel ein an den in Fahrtrichtung gesehen rechten seitlichen Rand 11 des Sitzflächenabschnitts anschließender Teilabschnitt 8a vorgesehen, der mit einem in Richtung zum anderen, also linken seitlichen Rand 11 hin anschließenden Teilabschnitt 8b durch eine Naht 13 verbunden ist. An den Teilabschnitt 8b schließen in Richtung zum linken seitlichen Rand 11 die Teilabschnitte 8c, 8d und 8e an, wobei der letztgenannte Teilabschnitt 8e sich bis zum in Fahrtrichtung gesehen linken seitlichen Rand 11 erstreckt. Die Teilabschnitte 8d und 8e sind wiederum durch eine Naht 13 miteinander verbunden. Die Teilabschnitte 8b und 8c sowie 8c und 8d sind über einen Teil ihrer Erstreckung in Richtung der Tiefe der Rücksitzbank 1 jeweils über eine Naht 13 und über den anderen Teil ihrer Erstreckung in Richtung der Tiefe der Rücksitzbank jeweils über einen Reißverschluss 14 miteinander verbunden. Die Naht 13 schließt hierbei an den vorderen Rand 10 an und der Reißverschluss 14 erstreckt sich anschließend an die Naht 13 bis zum Streifenabschnitt 9.

Die Reißverschlüsse 14 verlaufen also in Richtung der Tiefe der Rücksitzbank 1, d. h. parallel zur Fahrtrichtung des Kraftfahrzeugs.

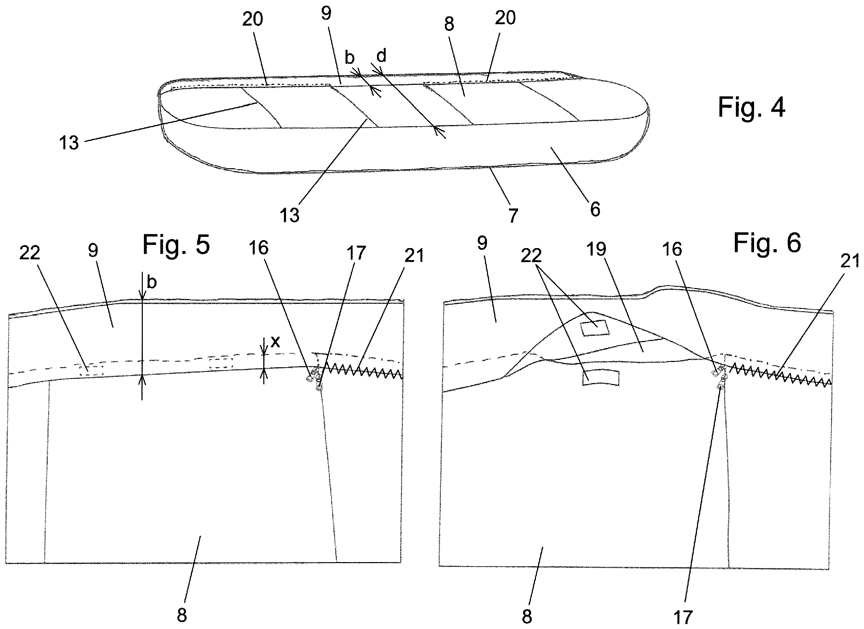

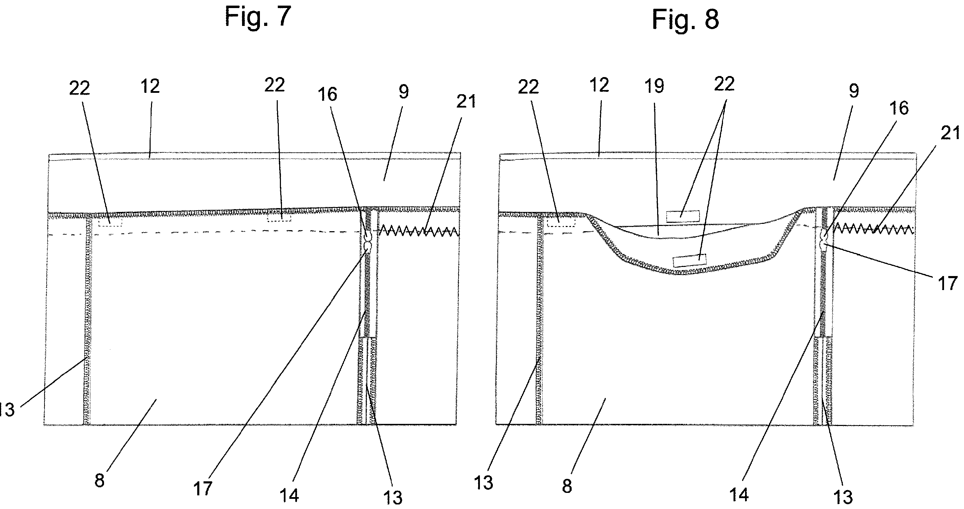

In den Fig. 5 und 6 sind nur die Schieber 16, 17, nicht aber die Reißverschlüsse 14 selbst sichtbar, da diese verdeckt eingenäht sind. Die Reißverschlüsse 14 sind in den Ansichten von der Rückseite entsprechend den Fig. 7, 8 ersichtlich, aus denen auch die Enden der Reißverschlüsse im Ausführungsbeispiel hervorgehen.

Die Reißverschlüsse dienen dazu, Durchtrittsmöglicheiten für Funktionselemente, insbesondere Gurtschlösser 15 zu schaffen. Damit eine solche Durchtrittsöffnung an einem beliebigen Ort des jeweiligen Reißverschlusses 14 ausgebildet werden kann, weist jeder der Reißverschlusse 14 einen ersten und einen zweiten Schieber 16, 17 auf. Wenn die Schieber 16, 17 voneinander beabstandet werden, so ist der jeweilige Reißverschluss 14 im dazwischenliegenden Bereich geöffnet.

An seinem vom Hauptabschnitt abgelegenen Rand weist der Streifenabschnitt 9 einen Gummizug 18 auf. Der Gummizug 18 erstreckt sich also im Bereich des hinteren Randes 12 des Sitzflächenabschnitts rechtwinklig zur Richtung der Tiefe der Rücksitzbank. Der Gummizug 18 schließt vorzugsweise direkt an den Gummizug 7 an. Hierzu verläuft also der untere Rand des Randabschnitts 6 zum seitlichen Ende des hinteren Randes des Streifenabschnitts 9.

Im an die Rücksitzbank angelegten Zustand 1 wird der Gummizug 18 etwas in den Spalt (sowie vorhanden) zwischen der Rückenlehne 2 und der Rücksitzbank 1 eingeschoben, wie dies in Fig. 2 dargestellt ist.

Zwischen dem Hauptabschnitt 8 und dem Streifenabschnitt 9 liegt eine Überlappung x vor, wobei im Bereich der Überlappung der Streifenabschnitt 9 oberhalb des Hauptabschnitts 8 liegt. Mit anderen Worten erstreckt sich der Hauptabschnitt 8 ausgehend vom vorderen Rand 10 des Sitzflächenabschnitts bis hinter den vorderen Rand des Streifenabschnitts 9, wobei er unter den Streifenabschnitt 9 ragt. Der Hauptabschnitt 8 und der Streifenabschnitt 9 sind hierbei nicht über die gesamte Ausdehnung rechtwinklig zur Tiefe der Rücksitzbank 1 miteinander vernäht. In den Bereichen, in welchen die Naht zwischen dem Hauptabschnitt 8 und dem Streifenabschnitt 9 unterbrochen ist, befinden sich also Öffnungen 19 zwischen dem Hauptabschnitt 8 und dem Streifenabschnitt 9. Damit die im Ausführungsbeispiel vorliegende Ausdehnung dieser Öffnungen 19 ersichtlich ist, ist der Überlapp zwischen dem Hauptabschnitt 8 und dem Streifenabschnitt 9 in den Fig. 3 und 4 lediglich im Bereich dieser Öffnungen durch eine gestrichelte Linie 20 angedeutet. Grundsätzlich könnte im miteinander vernähten Bereich zwischen dem Hauptabschnitt 8 und dem Streifenabschnitt 9 auch der den Streifenabschnitt 9 überlappende hintere Randbereich des Hauptabschnitts 8 abgeschnitten sein. Gemäß den Darstellungen 5 - 8 ist dieser aber stehengelassen und in den Fig. 5 und 6 als gestrichelte Linie sichtbar. In der rückseitigen Ansicht gemäß den Fig. 7 und 8 ist der hintere Rand des Hauptabschnitts 8 eingefasst dargestellt und der überlappende vordere Rand des Streifenabschnitts 9 durch eine gestrichelte Linie dargestellt. Außerdem ist in den Fig. 5 bis 8 ein Abschnitt der Naht 21 zwischen dem Hauptabschnitt 8 und dem Streifenabschnitt 9 ersichtlich, die als Zick-Zack-Linie dargestellt ist. Im Ausführungsbeispiel sind also zwei Öffnungen 19 zwischen dem Hauptabschnitt 8 und dem Streifenabschnitt 9 vorgesehen. Die erste Öffnung 19 erstreckt sich über den Teilabschnitt 8b und einen angrenzenden Teil des Teilabschnitts 8a. Die zweite Öffnung 19 erstreckt sich über den Teilabschnitt 8d und einen angrenzenden Teil des Teilabschnitts 8e.

Um den Hauptabschnitt 8 im Bereich der Öffnungen 19 mit dem Streifenabschnitt 9 verbinden zu können, sind Verschlusselemente 22 vorgesehen. Diese können vorteilhafterweise in Form von Klettverschlüssen ausgebildet sein. Auch andere Verschlusselemente, beispielsweise Druckknöpfe, wären denkbar und möglich.

Im Ausführungsbeispiel sind pro Öffnung 19 jeweils zwei beabstandete Verschlusselemente 22, insbesondere in Form von Klettverschlüssen, vorgesehen. Statt dessen könnte auch nur ein Verschlusselement oder es könnten mehr als zwei Verschlusselemente vorgesehen sein. Beispielsweise könnte ein über die Länge einer jeweiligen Öffnung 19 durchgehender Klettverschluss vorhanden sein.

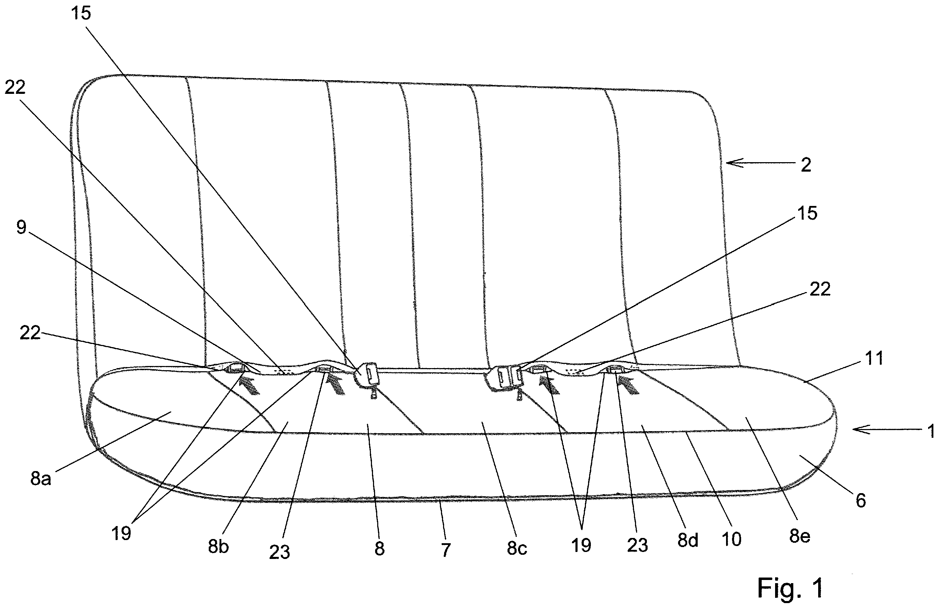

Durch die Öffnungen 19 können Funktionselemente 23 der Rücksitzbank 1 durchgeführt werden bzw. kann durch diese Öffnungen 19 ein Zugang zu Funktionselementen der Rücksitzbank 1 ermöglicht werden. Bei solchen Funktionselementen kann es sich beispielsweise um Kindersitz-Halterungsteile, insbesondere Isofix-Halterungen, handeln. Um einen Kindersitz an diesen Halterungsteilen zu befestigen, können Verbindungselemente des Kindersitzes durch die Öffnungen 19 in die Halterungsteile eingeschoben werden, wie dies in Fig. 1 durch Pfeile verdeutlicht ist.

Wenn die Öffnungen 19 nicht zum Durchtritt von bzw. zum Zugang zu Funktionselementen benötigt werden, so liegen der Streifenabschnitt 9 und der Hauptabschnitt 8 mit ihren überlappenden Bereichen aufeinander auf, wobei sie im Bereich der Öffnungen 19 zusätzlich durch die Verschlusselemente 22 aneinander gehalten sind. Die Öffnungen 19 sind somit geschlossen und es ergibt sich eine vorteilhafte Optik des Schonbezuges.

Wenn parallel zur Sitzfläche 3 verlaufende Verbindungselemente durch die Öffnungen 19 in die Funktionselemente, insbesondere Kindersitz-Halterungsteile, eingeschoben werden, so sind die Öffnungen 19 von oben gesehen ebenfalls nicht oder nur wenig sichtbar.

Durch die erfindungsgemäße Ausbildung wird bei einer vorteilhaften Optik und einfachen Ausbildung des Schonbezuges ein Durchtritt von bzw. Zugang zu Funktionselementen ermöglicht, wobei variable Lagen der Funktionselemente möglich sind.

Der erfindungsgemäße Schonbezug eignet sich auch für solche Rücksitzbänke, die an ihrem rückseitigen Ende etwas hochgezogen sind, z.B. im Bereich von 10 cm, und somit den untersten Abschnitt der Rückenlehne ausbilden, wobei in diesem hochgezogenen Bereich beispielsweise Öffnungen zum Zugang von Befestigungselementen, insbesondere Isofix-Befestigungen, für Kindersitze vorgesehen sind. Die eigentliche Rückenlehne schließt dann erst oberhalb dieses hochgezogenen Bereichs an. Der Streifenabschnitt des Schonbezugs kann in diesem Fall in den Schlitz zwischen dem hochgezogenen Bereich der Rücksitzbank und der eigentlichen Rückenlehne eingeschoben werden und die Öffnungen zwischen dem Streifenabschnitt und dem Hauptabschnitt des Sitzflächenabschnitts können auch zum Zugang von im Bereich des hochgezogenen Abschnitts der Rücksitzbank angeordneten Funktionselementen dienen, insbesondere zum Durchtritt von Kindersitz-Halterungsteilen.

Wenn in dieser Schrift von einer Naht die Rede ist, so umfasst dieser Begriff auch geklebte Nähte.

### Legende

### zu den Hinweisziffern:

- 1: Rücksitzbank
- 2: Rückenlehne
- 3: Sitzfläche
- 4: vordere Schmalseite
- 5: seitliche Schmalseite
- 6: Randabschnitt
- 7: Gummizug
- 8: Hauptabschnitt
- 8a: Teilabschnitt
- 8b: Teilabschnitt
- 8c: Teilabschnitt
- 8d: Teilabschnitt
- 8e: Teilabschnitt
- 9: Streifenabschnitt
- 10: vorderer Rand
- 11: seitlicher Rand
- 12: hinterer Rand
- 13: Naht
- 14: Reißverschluss
- 15: Gurtschloss
- 16: Schieber
- 17: Schieber
- 18: Gummizug
- 19: Öffnung
- 20: gestrichelte Linie
- 21: Naht
- 22: Verschlusselement
- 23: Funktionselement

## Patentansprüche

1. Schonbezug für die Rücksitzbank (1) eines Kraftfahrzeugs, umfassend einen Sitzflächenabschnitt (8, 9) zum Überdecken der Sitzfläche (3) und einen an einen vorderen Rand (10) und an seitliche Ränder (11) des Sitzflächenabschnitts anschließenden Randabschnitt (6) zur Anlage an der vorderen Schmalseite (4) und an seitlichen Schmalseiten (5) der Rücksitzbank (1), **dadurch gekennzeichnet, dass** der Sitzflächenabschnitt einen Hauptabschnitt (8) zum Überdecken eines an den vorderen Rand der Sitzfläche anschließenden Hauptteils der Sitzfläche (3) und einen an den Hauptabschnitt (8) anschließenden Streifenabschnitt (9) zum Überdecken eines an den hinteren Rand der Sitzfläche (3) anschließenden Randbereichs der Sitzfläche (3) aufweist, wobei die in Richtung der Tiefe der Rücksitzbank gemessene Breite (b) des Streifenabschnitts (9) weniger als ein Viertel der in Richtung der Tiefe der Rücksitzbank gemessenen gesamten Ausdehnung (a) des Sitzflächenabschnitts beträgt, und dass zwischen dem Hauptabschnitt (8) des Sitzflächenabschnitts und dem Streifenabschnitt (9) des Sitzflächenabschnitts mindestens eine Öffnung (19) ausgebildet ist, und zumindest im Bereich der Öffnung eine Überlappung (x) zwischen dem Streifenabschnitt (9) und dem Hauptabschnitt (8) vorliegt, wobei der Streifenabschnitt (9) den Hauptabschnitt (8) im Bereich der Überlappung überdeckt, und im Bereich der Öffnung (19) zumindest ein Verschlusselement (22) zum Verbinden des Streifenabschnitts (9) mit dem Hauptabschnitt (8) vorgesehen ist.

2. Schonbezug nach Anspruch 1, **dadurch gekennzeichnet, dass** sich der Streifenabschnitt (9) über die gesamte, rechtwinklig zur Richtung der Tiefe der Rücksitzbank (1) gemessene Ausdehnung des Sitzflächenabschnitts erstreckt.

3. Schonbezug nach Anspruch 1 oder 2, **dadurch gekennzeichnet, dass** mindestens zwei, rechtwinklig zur Richtung der Tiefe der Rücksitzbank beabstandete Öffnungen (19) zwischen dem Hauptabschnitt (8) und dem Streifenabschnitt (9) ausgebildet sind.

4. Schonbezug nach eine der Ansprüche 1 bis 3, **dadurch gekennzeichnet, dass** der vom Hauptabschnitt (8) abgelegene hintere Rand des Streifenabschnitts (9) einen Gummizug (18) aufweist.

5. Schonbezug nach Anspruch 4, **dadurch gekennzeichnet, dass** der Gummizug (18) am hinteren Rand des Streifenabschnitts (9) von einem Gummizug (7) fortgesetzt wird, der sich am vom Sitzflächenabschnitt abgelegenen Rand des Randabschnitts (6) befindet.

6. Schonbezug nach einem der Ansprüche 1 bis 5, **dadurch gekennzeichnet, dass** das zumindest eine Verschlusselement (22) ein Klettverschluss ist.

7. Schonbezug nach einem der Ansprüche 1 bis 6, **dadurch gekennzeichnet, dass** mindestens zwei rechtwinklig zur Richtung der Tiefe der Rücksitzbank (1) beabstandete Verschlusselemente (22) im Bereich einer jeweiligen Öffnung (19) vorhanden sind.

8. Schonbezug nach einem der Ansprüche 1 bis 7, **dadurch gekennzeichnet, dass** der Hauptabschnitt (8) mindestens einen in einem vom seitlichen Rand (11) des Sitzflächenabschnitts abgelegenen Bereich angeordneten, in Richtung der Tiefe der Rücksitzbank verlaufenden Reißverschluss (14) aufweist, der sich über zumindest einen Teil der in Richtung der Tiefe der Rücksitzbank (1) gemessenen Ausdehnung des Hauptabschnitts (8) erstreckt.

9. Schonbezug nach Anspruch 8, **dadurch gekennzeichnet, dass** sich der mindestens eine Reißverschluss (14) bis zum Streifenabschnitt (9) erstreckt.

10. Schonbezug nach Anspruch 8 oder 9, **dadurch gekennzeichnet, dass** der mindestens eine Reißverschluss (14) einen ersten und einen zweiten Schieber (16, 17) aufweist.
